# FASCICULE DE BREVET EUROPEEN

(11) **EP 0 468 833 B1**
(45) Date de publication et mention de la délivrance du brevet: **25.08.1993**
(21) Numéro de dépôt: 91401749.6
(22) Date de dépôt: 27.06.1991
(51) Int. Cl.: F04B 11/00, F04B 49/00

(54) **Pompe hydraulique à cycle alternatif**
Flüssigkeitspumpe mit hin- und hergehendem Kolben
Hydraulic reciprocating piston pump

(30) Priorité: 26.07.1990 FR 9009559
(43) Date de publication de la demande: 29.01.1992
(73) Titulaire: ALLIEDSIGNAL EUROPE SERVICES TECHNIQUES, 93700 Drancy (FR)
(72) Inventeur: Lebret, Pierre, Bendix Europe, F-93700 Drancy (FR)
(74) Mandataire: Bentz, Jean-Paul

(56) Documents cités:
- EP-A- 0 169 287
- EP-A- 0 327 218
- FR-E- 88 821

## Description

La présente invention concerne une pompe hydraulique comportant au moins un piston à cycle alternatif coulissant dans un cylindre fixe, cette pompe comportant en outre un clapet anti-retour d'aspiration disposé pour fermer, pendant la période de refoulement du cycle, la partie aval d'un perçage pratiqué dans le piston et faisant communiquer, pendant la période d'aspiration, une source de fluide sous basse pression et une chambre de travail définie dans le cylindre.

Une telle pompe est communément mise en oeuvre dans les circuits hydrauliques de freinage comprenant notamment un système d'anti-blocage des roues.

Le document EP-A-0 327 218 décrit par exemple une telle pompe dans une application telle qu'indiquée précédemment. Les pompes de ce type présentent l'inconvénient majeur de générer des impulsions de pression qui sont susceptibles d'engendrer des bruits en fonctionnement normal et une usure prématurée de certains composants.

La présente invention a pour but d'obvier à cet inconvénient par un écrétage de la pression de sortie de la pompe.

Dans ce but, selon l'invention, le piston comporte, côté chambre de travail, une jupe cylindrique au diamètre intérieur du cylindre, dans laquelle est pratiqué au moins un premier orifice faisant communiquer la chambre de travail et la paroi extérieure de la jupe. Un deuxième orifice fait communiquer le perçage en amont du clapet avec la paroi extérieure du piston, et une rainure de longueur au moins égale à la distance séparant les deux orifices, est pratiquée dans le cylindre de manière à faire communiquer ces orifices sur une zone déterminée du mouvement alternatif du piston lorsque le piston est sensiblement à mi-course.

De préférence, la rainure est une gorge périphérique dont la hauteur est, par exemple, sensiblement égale à la distance séparant les orifices.

De façon avantageuse, la gorge est pratiquée de façon à ce que les deux orifices communiquent lorsque l'accélération du piston change de signe.

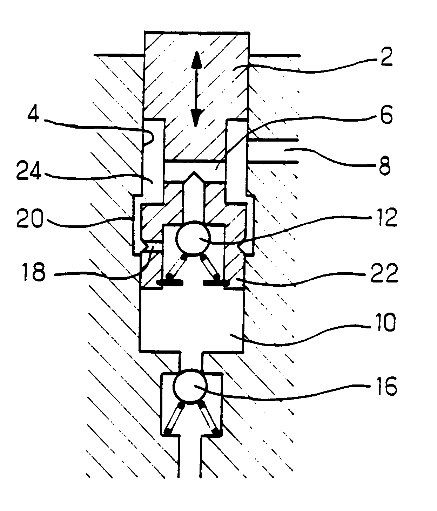

L'invention sera mieux comprise, et d'autres buts, avantages et caractéristiques de celle-ci apparaîtront plus clairement à la lecture de la description qui suit d'un mode préféré de réalisation donné à titre non limitatif et à laquelle une planche de dessin est jointe sur laquelle :
- la Figure Unique représente schématiquement en coupe une pompe selon l'invention.

En référence maintenant plus particulièrement à cette Figure Unique, un piston 2 coulisse de façon alternative dans un cylindre 4, par exemple sous l'effet d'une came excentrée non représentée pilotée par un moteur électrique de façon conventionnelle. Ce piston 2 est pourvu d'un perçage approprié 6 pour relier par un conduit 8 une source de fluide sous basse pression (non représentée), à une chambre de travail 10 par l'intermédiaire d'un clapet anti-retour d'aspiration 12.

Dans l'exemple représenté, ce clapet anti-retour 12 est constitué par une bille fermant le perçage 6 sous l'effet d'un ressort.

La chambre de travail 10 communique avec un circuit utilisateur par l'intermédiaire d'un clapet anti-retour de refoulement 16 également constitué, dans l'exemple représenté par une bille chargée par un ressort.

Selon l'invention, le piston 2 se prolonge, côté chambre de travail 10, par une jupe cylindrique 22 de même diamètre extérieur que le diamètre intérieur du cylindre 4. Dans cette jupe 22, on a pratiqué un orifice 18 faisant communiquer la chambre de travail 10 et la paroi extérieure de la jupe 22.

En amont du clapet 12, on a pratiqué un orifice 24 faisant communiquer le perçage 6 avec la paroi extérieure du piston 2. Dans l'exemple représenté, cet orifice 24 est, en pratique, constitué par la gorge permettant l'alimentation de la pompe et reliée par le conduit 8 à la source de fluide sous basse pression.

Une rainure 20 d'une longueur au moins égale à la distance séparant les deux orifices 18, 24 est pratiquée dans le cylindre. Cette rainure est, favorablement, une gorge périphérique dont la hauteur est sensiblement égale à la distance séparant les deux orifices 18, 24.

Ainsi, lorsque la pompe est en fonctionnement, le piston 2 effectuant son mouvement de translation alternatif, pendant un temps déterminé par la hauteur de cette gorge 20, la chambre de travail 10 communique avec la source à basse pression.

En choisissant judicieusement la position de la gorge par rapport à la course du piston, cette gorge 20 permet d'écrêter la pression dans la chambre de travail. On choisira de disposer cette gorge de telle manière que les deux orifices 18, 24 communiquent lorsque le piston est sensiblement à mi-course, par exemple à vitesse linéaire maximale, ce qui correspond à un changement de signe de l'accélération, de manière à supprimer la crête de pression.

En choisissant également judicieusement la hauteur de la gorge, donc la durée de la communication, on pourra aisément régler la largeur de l'impulsion de pression écrêtée. Enfin, en choisissant judicieusement la largeur des orifices et la profondeur de la gorge, on pourra ajuster simplement la chute de pression subséquente.

L'homme du métier pourra apporter de nombreux changements et ajustements à l'invention sans sortir de son cadre tel que défini par les revendications jointes.

Par exemple, l'orifice 24 pourra être constitué par un perçage radial du piston 2 reliant le perçage 6 en amont et à proximité immédiate du clapet 12.

## Revendications

1. Pompe hydraulique comportant au moins un piston (2) à cycle alternatif coulissant dans un cylindre fixe (4), la dite pompe comportant en outre un clapet anti-retour d'aspiration (12) disposé pour fermer, pendant la période de refoulement du cycle, la partie aval d'un perçage (6) pratiqué dans le piston (2) et faisant communiquer, pendant la période d'aspiration, une source de fluide sous basse pression et une chambre de travail (10) définie dans le cylindre (4), caractérisée en ce que le dit piston (2) comporte, côté chambre de travail (10), une jupe cylindrique (22) au diamètre intérieur du cylindre (4), dans laquelle est pratiqué au moins un premier orifice (18) faisant communiquer la dite chambre de travail (10) et la paroi extérieure de la dite jupe (22), qu'un deuxième orifice (24) fait communiquer le dit perçage (6) en amont du dit clapet (12) avec la paroi extérieure du dit piston (2), et qu'une rainure (20), de longueur au moins égale à la distance séparant les dits orifices (18, 24), est pratiquée dans le dit cylindre (4) de manière à faire communiquer ces dit orifices (18, 24) sur une zone déterminée du mouvement alternatif du piston lorsque le piston (2) est sensiblement à mi-course.

2. Pompe hydraulique selon la revendication 1, caractérisée en ce que la dite rainure (20) est une gorge périphérique.

3. Pompe hydraulique selon la revendication 2, caractérisée en ce que la hauteur de la gorge (20) est sensiblement égale à la distance séparant les dits orifices (18, 24).

4. Pompe hydraulique selon l'une quelconque des revendications précédentes, caractérisée en que la dite gorge (20) est pratiquée de façon à ce que les dits orifices (18, 24) communiquent lorsque l'accélération du dit piston (2) change de signe.

## Claims

1. Hydraulic pump comprising at least one reciprocating piston (2) sliding in a stationary cylinder (4), said pump comprising, furthermore, a non-return suction valve (12) arranged so as, during the delivery period of the cycle, to close the downstream part of a duct (6) made in the piston (2) and, during the suction period, putting a source of fluid under low pressure in communication with a working chamber (10) defined in the cylinder (4), characterised in that said piston (2) comprises, on the same side as the working chamber (10), a cylindrical skirt (22) which has the inside diameter of the cylinder (4) and in which is made at least one first port (18) putting said working chamber (10) in communication with the outer wall of said skirt (22), in that a second port (24) puts said duct (6) upstream of said valve (12) in communication with the outer wall of said piston (2), and in that a slot (20) of a length at least equal to the distance separating said ports (18, 24) is made in said cylinder (4) so as to cause these said ports (18, 24) to communicate over a specific zone of the reciprocating movement of the piston when the piston (2) is sensibly at mid-stroke.

2. Hydraulic pump according to Claim 1, characterised in that said slot (20) is a peripheral groove.

3. Hydraulic pump according to Claim 2, characterised in that the height of the groove (20) is substantially equal to the distance separating the said ports (18, 24).

4. Hydraulic pump according to anyone of the preceding Claims, characterised in that said groove (20) is made in such a way that said ports (18, 24) communicate when the acceleration of said piston (2) changes sign.

## Patentansprüche

1. Hydraulikpumpe mit wenigstens einem Kolben (2), der in einer hin- und hergehenden Bewegung in einem festen Zylinder (4) gleitet, wobei die Pumpe außerdem ein Ansaugrückschlagventil (12) enthält, welches so angeordnet ist, daß es während des Förderabschnitts der Bewegung den stromabwärts gelegenen Teil einer im Kolben (2) ausgebildeten Bohrung (6) verschließt und während des Ansaugabschnitts eine Quelle von unter niedrigem Druck stehendem Fluid mit einer im Zylinder (4) abgegrenzten Arbeitskammer (10) verbindet, dadurch gekennzeichnet, daß der Kolben (2) auf der Seite der Arbeitskammer (10) eine zylindrische Schürze (22) mit dem Innendurchmesser des Zylinders (4) enthält, in der wenigstens eine erste, die Arbeitskammer (10) mit der Außenwand der Schürze (22) verbindende Öffnung (18) ausgebildet ist, daß eine zweite Öffnung (24) die Bohrung (6) stromaufwärts von dem Ventil (12) mit der Außenwand des Kolbens (2) verbindet, und daß eine Nut (20), deren Länge wenigstens gleich dem Abstand zwischen den Öffnungen (18, 24) ist, in dem Zylinder (4) so ausgebildet ist, daß sei die Öffnunggen (18, 24) in einem bestimmten Bereich der hin- und hergehenden Bewegung des Kolbens verbindet, wenn sich der Kolben (2) im wesentlichen in der Mittel der Bewegung befindet.

2. Hydraulikpumpe nach Anspruch 1, dadurch gekennzeichnet, daß die Nut (20) eine Umfangsauskehlung ist.

3. Hydraulikpumpe nach Anspruch 2, dadurch gekennzeichnet, daß die Höhe der Auskehlung (20) im wesentlichen gleich dem Abstand zwischen den Öffnungen (18, 24) ist.

4. Hydraulikpumpe nach einem der vorhergehenden Ansprüche, dadurch gekennzeichnet, daß die Auskehlung (20) so ausgebildet ist, daß die beiden Öffnungen (18, 24) miteinander verbunden sind, wenn die Beschleunigung des Kolbens (2) das Vorzeichen wechselt.
